# FASCICULE DE BREVET EUROPEEN

(11) **EP 2 855 395 B1**
(45) Date de publication et mention de la délivrance du brevet: **06.03.2019**
(21) Numéro de dépôt: 13728500.3
(22) Date de dépôt: 27.05.2013
(51) Int. Cl.: C04B 28/14, B22C 1/18

(54) **COMPOSITION DE PLÂTRE POUR MOULES REFRACTAIRES**
GIPSZUSAMMENSETZUNG FÜR FEUERFESTE FORMEN
GYPSUM COMPOSITION FOR REFRACTORY MOULDS

(30) Priorité: 30.05.2012 FR 1254957
(43) Date de publication de la demande: 08.04.2015
(73) Titulaire: Saint-Gobain Placo, 92282 Suresnes (FR)
(72) Inventeur: RETOT, Hélène, F-84000 Avignon (FR); PETIGNY, Nathalie, F-84740 Velleron (FR); FOURDRIN, Emmanuel, F-84740 Velleron (FR); THIOLIERE, Stéphane, F-91190 Gif Sur Yvette (FR)
(74) Mandataire: Saint-Gobain Recherche
(86) Numéro de dépôt international: PCT/FR2013/051169
(87) Numéro de publication internationale: WO 2013/178923

(56) Documents cités:
- WO-A2-02/081122
- FR-A1- 2 797 869
- GB-A- 2 198 125
- US-A- 6 013 125
- DATABASE COMPENDEX [Online] ENGINEERING INFORMATION, INC., NEW YORK, NY, US; 2010, NANDI A K ET AL: "Experimental studies on equivalent thermal properties of particle-reinforced flexible mould materials", XP002691766, Database accession no. E20104713407806 & NANDI A K ET AL: "Experimental studies on equivalent thermal properties of particle-reinforced flexible mould materials", WIT TRANSACTIONS ON THE BUILT ENVIRONMENT - HIGH PERFORMANCE STRUCTURES AND MATERIALS V, HPSM 2010 2010 WITPRESS GBR, vol. 112, 2010, pages 365-376, DOI: 10.2495/HPSM100341

## Description

La présente invention concerne des compositions de plâtre, destinées à la fabrication de moules de fonderie réfractaires, contenant un additif à haute conductivité thermique et haute surface spécifique.

La fonderie à la cire perdue est une technique millénaire dans laquelle un moule en plâtre réfractaire est coulé autour d'un modèle en cire. Après durcissement du plâtre, la cire est éliminée du moule (étape de « décirage ») par chauffage. Après cuisson et mise en température du moule, le métal liquide est coulé dans le creux laissé par le modèle en cire.

Des techniques analogues utilisent des modèles à base de matériaux élastomères, par exemple à base de silicone élastomère, qui présentent l'avantage d'être réutilisables.

Pour obtenir des pièces moulées de bonne qualité, exemptes de défauts, il est important que le refroidissement du métal se fasse de la manière la plus homogène possible. En effet, en particulier pour le moulage de pièces comportant des parties relativement épaisses, on observe souvent une solidification précoce du métal dans le canal d'alimentation. Le bouchon de métal solide ainsi formé coupe le métal encore liquide, à l'intérieur du moule, du bain de métal fondu et interdit toute compensation de la contraction de la pièce par un apport additionnel de métal.

Les vides qui se forment alors au coeur ou à la surface de la pièce métallique constituent des défauts appelés « retassures ».

La coulée du métal fondu doit se faire dans un moule réfractaire parfaitement sec et généralement préchauffé. Si le moule contient encore des zones humides, il y a un risque d'évaporation instantanée de l'eau résiduelle et formation de bulles de gaz qui créent des défauts dans la pièce finale. L'étape de séchage et de préchauffage est cruciale et a une durée assez longue, difficilement compressible, de quelques heures. Pour un séchage rapide du moule, il est non seulement important que la température du moule soit la plus homogène possible, mais il convient de veiller à ce que le matériau présente une microporosité ouverte permettant une bonne évacuation de l'eau sous forme de vapeur. Le paramètre utilisé couramment pour quantifier cette microporosité est la perméabilité intrinsèque, déterminée de la manière décrite dans les exemples.

Pour prévenir la formation des retassures, il est connu d'augmenter la conductivité thermique des moules. La demande FR 2845986 par exemple propose ainsi l'augmentation de la teneur en alumine des compositions de plâtre en remplacement d'une partie de la charge silicique. Ce document n'examine toutefois pas l'aspect de la perméabilité intrinsèque et de la durée de séchage et de mise en température du moule avant coulée.

La demande CN101259514 divulgue un procédé de préparation de moules réfractaires pour le coulage de métaux. La composition contient de 20 à 35 % de poudre de plâtre, de 3,2 à 10 % de poudre de quartz, de 50 à 60 % de bauxite, de 4 à 10 % de poudre de talc et de 1,5 à 5 % de poudre de graphite, ainsi que de 0,1 à 0,3 % de fibres de verre. Ce document mentionne le raccourcissement du temps de cuisson du moule.

La demande GB 2 198 125 divulgue des compositions de moulage pour la fonderie à la cire perdue en vue de la fabrication de prothèses dentaires. Les compositions de moulage comprennent un liant minéral auquel est ajouté de l'amidon brut et au moins un composé de métal de transition en tant qu'agent d'expansion.

Le brevet US 6 013 125 divulgue des poudres de moulage pour la fonderie à la cire perdue de métaux, contenant du gypse, de la silice et de 0,5 à 10 % d'au moins un agent oxydant hydrosoluble.

La demande internationale WO 02/081122 divulgue des compositions de moulage pour la fonderie à la cire perdue de métaux, contenant en tant que liant hydraulique du clinker de ciment Portland broyé exempt de sulfate.

La demande FR 2 797 869 décrit des compositions aqueuses de moulage comprenant un agrégat réfractaire, un liant hydraulique, éventuellement un agent de fluidification et un fondant.

Dans le cadre de ses recherches visant à améliorer encore les propriétés des moules réfractaires produits, la Demanderesse a découvert qu'il était possible de raccourcir encore la durée de cuisson des moules et de favoriser l'homogénéité thermique des moules avant et après la coulée du métal, en utilisant des additifs bons conducteurs thermiques qui présentent une surface spécifique élevée. A la connaissance de la Demanderesse, ce dernier paramètre n'a jusqu'ici pas été pris en considération lors du choix des ingrédients d'une composition de moulage pour moules réfractaires.

La Demanderesse a constaté en particulier que la sélection d'additifs à haute conductivité thermique et à surface spécifique élevée permettait d'obtenir, même pour des concentrations d'additifs relativement faibles, inférieures à 5 % en poids, des temps de cuisson encore plus courts qu'avec des additifs ayant une conductivité thermique équivalente mais une surface spécifique significativement plus faible.

Dans un premier aspect, la présente invention a par conséquent pour objet une composition minérale, pulvérulente, pour la préparation de moules de fonderie, comprenant
(a) de 20 à 90 % en poids de plâtre,
(b) de 10 à 80 % en poids d'un composant minéral à base de silice et/ou d'alumine, et
(c) de 0,5 à 4,8 % en poids, d'une poudre minérale présentant une conductivité thermique (λ) à 20 °C, comprise entre 20 et 500 W/(m.K) et une surface spécifique BET comprise entre 12 et 50 m²/g, ces pourcentages étant rapportés au poids total de la somme des composants (a), (b) et (c).

La présente invention a également pour objet l'utilisation d'une telle composition minérale pour la fabrication de moules de fonderie réfractaires, et plus particulièrement un procédé de fabrication d'un moule de fonderie, comprenant
- le gâchage d'une composition minérale, pulvérulente, telle que définie ci-dessus avec de l'eau de manière à obtenir une composition fluide,
- la coulée de la composition fluide dans un moule contenant un modèle de la pièce à mouler,
- la prise de la composition gâchée et, après durcissement complet,
- l'élimination du modèle ou séparation du modèle et du moule obtenu.

Enfin, l'invention a pour objet un moule de fonderie susceptible d'être obtenu par le procédé décrit ci-avant.

Les ingrédients (a) et (b) sont des matériaux utilisés classiquement pour la fabrication de moules réfractaires et sont décrits par exemple dans la demande US 2004/0256081.

Le composant minéral à base de silice et/ou d'alumine est de préférence choisi dans le groupe formé par la silice amorphe, la silice cristalline telle que le quartz et la cristobalite, l'alumine, la cordiérite et les chamottes réfractaires à base de mullite, le quartz étant un composant (b) particulièrement préféré. On utilisera de préférence des poudres fines ayant une granulométrie telle que la taille moyenne des particules soit inférieure à 1 mm, de préférence inférieure à 0,5 mm et en particulier inférieure à 200 µm.

Le composant (b) est utilisé de préférence à raison de 30 à 75 %, en particulière à raison de 40 à 70 % en poids, rapporté au poids total de la somme des composants (a), (b) et (c). Le composant (b) est avantageusement majoritaire par rapport au composant (a). En effet, moins la composition contient de plâtre, moins il faudra de l'eau et plus le séchage sera rapide. Il faudra toutefois une quantité suffisante de plâtre (liant) pour conférer aux moules une résistance mécanique suffisante.

Comme expliqué en introduction, le composant (c) doit avoir à la fois une conductivité thermique élevée et une surface spécifique élevée.

La conductivité thermique à 20 °C est déterminée conformément à la norme ISO 8894 sur un échantillon massif de l'ingrédient (c).

La conductivité thermique (λ) à 20 °C de la poudre minérale (c) est comprise entre 20 et 500 W/(m.K).

On peut citer à titre d'exemples de matériaux présentant des conductivités thermiques appropriées le graphite, l'oxyde de zinc, les carbures de silicium, de bore, de zirconium ou de tungstène, les nitrures de titane, d'aluminium, de gallium ou d'indium, et les métaux choisis parmi le nickel, le fer et le cuivre. Parmi ceux-ci, on préfère le graphite (24 W/mK), le carbure de silicium (490 W/(mK)), et les métaux choisis parmi le nickel (90 W/(mK)), le fer (80 W/(mK)) et le cuivre (400 W/(mK)), et en particulier le carbure de silicium et le graphite.

On peut trouver d'autres matériaux minéraux ayant des conductivités appropriées dans des tables publiées par exemple dans le Handbook of Chemistry and Physics.

La surface spécifique du composant (c) est déterminée de manière connue selon la méthode BET par adsorption d'azote. Elle est comprise entre 12 et 50 m²/g, en particulier entre 15 et 40 m²/g et idéalement entre 20 et 30 m²/g.

Le diamètre médian (D₅₀) des particules de la poudre minérale (c), déterminé par granulométrie laser, est avantageusement supérieur à 1 µm, de préférence compris entre 2 et 500 µm, plus préférentiellement compris entre 5 et 250 µm, encore plus préférentiellement entre 10 et 200 µm et en particulier entre 20 et 150 µm.

Enfin, la poudre minérale formant le composant (c) présente avantageusement une masse volumique apparente comprise entre 0,02 et 0,3 g/cm³, en particulier entre 0,03 et 0,2 g/cm³.

Dans un mode de réalisation particulièrement préféré de la présente invention, le composant (c) est du graphite expansé ou du graphite expansé re-comprimé, ou un mélange de ceux-ci.

La fabrication de graphite expansé est décrite par exemple dans EP1491497, et des graphites expansés sont commercialisés par exemple sous la dénomination « ABG » par la société Superior Graphite, sous la dénomination « Expanded Graphite Powder » par la société Handan Universe New Building Ltd. , et sous la dénomination « Expanded Graphite » par la société Kaiyu Industrial Ltd..

Le graphite expansé re-comprimé, également appelé graphite expansé compacté, est commercialisé sous la dénomination « Ecophit® G » par la société SGL Group - The Carbon Company.

Son utilisation dans des plaques de plâtre destinées à la construction est décrite par exemple dans la demande US 2007/0031704. Dans ce document, le graphite expansé compacté est utilisé à une concentration comprise entre 5 et 50 % en poids pour augmenter la conductivité thermique des plaques. La limite inférieure de cette fourchette est considérée, au paragraphe [0061] de ce document, comme située en dessous du seuil de percolation, estimé à environ 10 à 15 %. Au vu de l'enseignement de ce document de l'état de la technique, la Demanderesse a été étonnée de constater qu'à des concentrations significativement inférieures à ce seuil de percolation, la présence de graphite expansé et/ou de graphite expansé compacté augmentait non seulement la diffusivité des moules réfractaires préparés, mais permettait un raccourcissement important de la durée de séchage et de mise en température des moules, comme il sera montré ci-après dans les exemples.

Le composant (c), et en particulier le graphite expansé, compacté ou non, est de préférence utilisé dans les compositions de la présente invention à raison de 1,5 à 4,5% en poids, en particulier de 2 à 4,5 % en poids.

La composition de la présente invention peut contenir, en plus des composants (a), (b) et (c), jusqu'à 30 % en poids, rapporté au poids total des composants (a) + (b) + (c), d'un ou plusieurs autres additifs minéraux (composant (d)), différents des ingrédients (a), (b) et (c). Ces additifs sont choisis de préférence dans le groupe formé par les billes de verre, expansés ou non, les paillettes de verre, les fibres minérales, et la vermiculite, de préférence dans le groupe forme par les billes de verre expansées et les fibres de verre.

Enfin, la composition de l'invention peut bien entendu renfermer divers additifs fonctionnels tels que des retardateurs de prise, des accélérateurs de prise, des agents fluidifiants, des agents épaississants, des agents mouillants, des agents hydrofuges tels que des silicones ou des cires, des agents limitant l'expansion pendant la prise, des inhibiteurs de déformation, des agents anti-mousse, des agents anti-décantation, des agents moussants, des stabilisateur de mousse, des bactéricides, des fongicides, des agents d'ajustement du pH ou des agents colorants.

Lors de la préparation des moules réfractaires, on mélange l'ensemble des ingrédients avec une quantité appropriée d'eau. Cette quantité d'eau est avantageusement telle que le rapport pondéral eau/matières sèches soit compris entre 0,2 et 0,6, de préférence entre 0,3 et 0,5.

Cette préparation fluide est coulée dans un récipient contenant le modèle de la pièce à mouler. Ce modèle est classiquement en cire (procédé à la cire perdue), mais on peut tout aussi bien utiliser des modèles en élastomère, par exemple en silicone, qui peuvent être retirés du moule après durcissement de celui-ci et réutilisés.

On laisse avantageusement la composition durcie et démoulée cristalliser en la laissant reposer dans les conditions ambiantes pendant une durée au moins égale à environ 2 heures, de préférence comprise entre 2 et 4 heures. A la fin de cette étape de cristallisation, on la met dans une étuve, de préférence ventilée, thermostatée à une température comprise généralement entre 200 °C et 800 °C, de préférence entre 200 °C et moins de 600 °C.

La durée de cuisson (séchage et mise en température) dépend bien entendu de la taille et compacité des moules. Plus les moules sont gros et compacts, plus il convient d'augmenter la durée de cuisson. Il est bien entendu envisageable de procéder par paliers de température.

L'élimination du modèle peut se faire soit à la fin de l'étape de cristallisation, lorsqu'il s'agit par exemple d'un modèle en silicone, soit au cours de l'étape de cuisson lorsqu'il s'agit par exemple d'un modèle en cire.

Grâce à la présence d'un additif bon conducteur thermique et à haute surface spécifique tel que décrit ci-avant, le moule de fonderie préparé de cette manière présente avantageusement une diffusivité thermique à température ambiante comprise entre 0,2 et 2 mm²/s, de préférence entre 0,3 et 1,5 mm²/s, en particulier entre 0,7 et 1,2 mm²/s.

La coulée du métal se fait de préférence immédiatement après la fin de la cuisson sur le moule chaud.

Le refroidissement du moule après coulée peut se faire par simple repos à température ambiante, mais on peut également envisager un refroidissement actif ou une combinaison de ces deux modes de réalisation.

Grâce à la diffusivité élevée du moule, on raccourcit non seulement la durée de cuisson des moules réfractaires, mais également la durée de refroidissement.

### Exemple

On prépare cinq compositions minérales par mélange des ingrédients suivants :

**Tableau 1 : Quantités massiques et fractions volumiques des ingrédients de cinq compositions minérales pour moules réfractaires**

| | **Composition A1 (invention)** | **Composition A2 (invention)** | Composition B (comparative) | Composition C1 (comparative) | Composition C2 (comparative) |
|---|---|---|---|---|---|
| Silice extra-fine | 1000 g (44 %) | 817 g (33%) | 864 g (37,4 %) | 1034 g (45,5 %) | 680 g (34%) |
| Silice fine | 470 g (20,5 %) | 385 g (15,5%) | 406,5 g (17,6 %) | 486 g (21,5 %) | 320 g (16 %) |
| Plâtre alpha | 780 g (33 %) | 1263 g (49 %) | 792 g (33 %) | 778 g (33 %) | 1000 g (50 %) |
| Ecophit® GFG50* | 48 g (2,5 %) | - | - | - | - |
| Superfine expanded graphite** | - | 34 g (2,5 %) | - | - | - |
| Graphite SLP50*** | - | - | 236 g (12 %) | - | - |
| Total | 2300 g (100 %) | 2500 g (100 %) | 2300 g (100 %) | 2300 g (100 %) | 2000 g (100 %) |

| | | | | | |
|---|---|---|---|---|---|
| *Poudre de graphite expansé comprimé commercialisé par la société SGL Group - The Carbon Company (plus de 95 % de carbone, diamètre médian (D₅₀) = 100 µm, surface spécifique 20 - 25 m²/g, densité apparente 0,05 - 0,1 g/cm³) **Poudre de graphite expansé (non compacté) commercialisée par la société Handan Universe New Building Ltd, surface spécifique 25 m²/g *** Poudre de graphite commercialisée par la société Timrex, diamètre médian (D₅₀) = 22 µm, surface spécifique 3 - 7 m²/g, densité apparente 0,4 g/cm³) | | | | | |

On gâche chacune de ces poudres avec une quantité d'eau telle que le rapport massique eau/plâtre soit égal à 1,3. On coule les compositions fluides obtenues dans des moules de formes appropriées pour obtenir les éprouvettes servant à la caractérisation des échantillons durcis.

Le temps de séchage jusqu'à 200 °C est déterminé de la manière suivante :
On prépare par moulage des échantillons de forme tronconique présentant, à leur base, un diamètre compris entre 90 et 100 mm et une hauteur de 120 mm. Après durcissement de la composition, on démoule les échantillons et on les laisse pendant 2 heures à température ambiante. Ensuite, on les place dans un four thermostaté à 250 °C. Un thermocouple au centre de chaque échantillon permet de suivre en continu l'augmentation de la température. On détermine pour chaque échantillon la durée nécessaire pour porter le coeur de l'échantillon à une température de 200 °C.

La diffusivité thermique est déterminée de la manière suivante : Des échantillons de 40 mm x 40 mm x 15 mm sont séchés à 45 °C et peints en noir. Chaque échantillon est isolé au niveau de la tranche (15 mm). Une des faces carrées est chauffée par une lampe flash et on mesure à l'aide d'un détecteur infrarouge l'énergie thermique émise par la face opposée en fonction du temps. Le thermogramme ainsi obtenu permet de calculer la diffusivité à température ambiante par la méthode Levenberg-Marquart.

La perméabilité intrinsèque est déterminée par mesure de la perméabilité aux gaz du matériau, selon la norme ISO 8841 :1991, pour différentes pressions (P). La perméabilité intrinsèque correspond à l'intersection du graphe Perméabilité = f(1/P) avec l'ordonnée (1/P = 0). Plus la perméabilité intrinsèque sera importante, plus on peut espérer un séchage rapide du moule réfractaire.

Le diamètre moyen des pores est déterminé par porosimétrie au mercure.

Le tableau 2 ci-après montre les résultats de ces caractérisations pour les deux compositions selon l'invention et les trois compositions comparatives du tableau 1.

**Tableau 2**

| | **Composition A1 (invention)** | **Composition A2 (invention)** | Composition B (comparative) | Composition C1 (comparative) | Composition C2 (comparative) |
|---|---|---|---|---|---|
| Temps de séchage jusqu'à 200 °C (minutes) | 176 | 200 | 207 | 219 | 250 |
| Diffusivité à température ambiante (mm²/s) | 0,99 | 0,83 | 0,76 | ND* | 0.57 |
| Perméabilité intrinsèque (10⁻¹⁴ m²) | 6,5 | ND* | 3,4 | 7,7 | 3,3 |
| Diamètre moyen des pores | 4,3 | ND* | 2,75 | ND* | 2,8 |

| | | | | | |
|---|---|---|---|---|---|
| *non déterminé | | | | | |

On constate que les deux compositions (A1 et A2) selon l'invention contenant 2,5 % en volume d'une poudre de graphite à haute surface spécifique donnent des échantillons qui peuvent être séchés beaucoup plus rapidement qu'un échantillon obtenu avec une composition exempte de poudre de graphite (respectivement Compositions C1 et C2). Les performances des deux échantillons selon l'invention (A1 et A2) sont également meilleurs que celles obtenues avec une composition comparative (Composition B) contenant 12 % en volume d'une poudre de graphite présentant une surface spécifique relativement plus faible.

On peut en outre constater que la présence du graphite comparatif (graphite non expansé, diamètre médian (D₅₀) = 22 µm, surface spécifique 3 - 7 m²/g, densité apparente 0,4 g/cm³) dans la composition B réduit significativement la perméabilité intrinsèque du moule par rapport à la composition C1. La diminution de cette perméabilité intrinsèque est considérablement plus faible pour la composition A1 contenant un graphite expansé.

## Revendications

1. Composition minérale pour la préparation de moules de fonderie, comprenant
(a) de 20 à 90 % en poids de plâtre,
(b) de 10 à 75 % en poids d'un composant minéral à base de silice et/ou d'alumine, et
(c) de 0,5 à 4,8 %, de préférence de 1,5 et 4,5% en poids, et en particulier entre 2 et 4,5 % en poids, d'une poudre minérale présentant une conductivité thermique (λ) à 20 °C comprise entre 20 et 500 W/(m.K) et une surface spécifique BET comprise entre 12 et 50 m²/g,
ces pourcentages étant rapportés au poids total de la somme des composants (a), (b) et (c).

2. Composition minérale selon la revendication 1, **caractérisée par le fait que** la poudre minérale (c) est une poudre de graphite, de préférence une poudre de graphite expansé ou une poudre de graphite expansé compacté.

3. Composition minérale selon l'une quelconque des revendications précédentes, **caractérisée par le fait que** le diamètre médian (D₅₀) de la poudre minérale (c), déterminé par granulométrie laser, est compris entre 5 et 250 µm, de préférence entre 10 et 200 µm et en particulier entre 20 et 150 µm.

4. Composition minérale selon l'une quelconque des revendications précédentes, **caractérisée par le fait que** la surface spécifique BET de la poudre minérale (c) est comprise entre 15 et 40 m²/g et en particulier entre 20 et 30 m²/g.

5. Composition minérale selon l'une quelconque des revendications précédentes, **caractérisée par le fait que** la poudre minérale (c) présente une masse volumique apparente comprise entre 0,02 et 0,3 g/cm³, de préférence entre 0,03 et 0,2 g/cm³.

6. Composition minérale selon l'une quelconque des revendications précédentes, **caractérisée par le fait que** le composant minéral (b) à base de silice et/ou d'alumine est choisi dans le groupe formé par la silice, l'alumine, la cordiérite ou une chamotte réfractaire à base de mullite.

7. Composition minérale selon l'une quelconque des revendications précédentes, **caractérisée par le fait qu'**elle contient en outre jusqu'à 30 % en poids d'un ou plusieurs autres additifs, choisis de préférence dans le groupe formé par les billes de verre, expansé ou non, les paillettes de verre, les fibres minérales, et la vermiculite, de préférence dans le groupe forme par les billes de verre expansées et les fibres de verre.

8. Procédé de fabrication d'un moule de fonderie, comprenant
- le gâchage de la composition minérale selon l'une quelconque des revendications précédentes avec de l'eau de manière à obtenir une composition fluide,
- la coulée de la composition fluide dans un moule contenant un modèle de la pièce à mouler,
- la prise de la composition gâchée et, après durcissement complet,
- l'élimination du modèle ou séparation du modèle et du moule obtenu.

9. Moule de fonderie susceptible d'être obtenu par le procédé de la revendication 8.

10. Moule de fonderie selon la revendication précédente, **caractérisé par le fait qu'**il présente une diffusivité thermique à température ambiante comprise entre 0,2 et 2 mm²/s, de préférence entre 0,3 et 1,5 mm²/s, en particulier entre 0,7 et 1,2 mm²/s.

## Patentansprüche

1. Mineralische Zusammensetzung zur Herstellung von Gießformen, umfassend
(a) 20 bis 90 Gew.-% Gips,
(b) 10 bis 75 Gew.-% eines mineralischen Bestandteils auf Basis von Siliciumdioxid und/oder Aluminiumoxid und
(c) 0,5 bis 4,8 Gew.-%, vorzugsweise 1,5 bis 4,5 Gew.-%, und insbesondere zwischen 2 und 4,5 Gew.-% eines mineralischen Pulvers mit einer Wärmeleitfähigkeit (λ) bei 20 °C zwischen 20 und 500 W/(m.K) und einer spezifischen BET-Oberfläche zwischen 12 und 50 m²/g,
wobei sich diese Prozentsätze auf das Gesamtgewicht der Summe der Bestandteile (a), (b) und (c) beziehen.

2. Mineralische Zusammensetzung nach Anspruch 1, **dadurch gekennzeichnet, dass** das mineralische Pulver (c) ein Graphitpulver, vorzugsweise ein expandiertes Graphitpulver oder ein verdichtetes expandiertes Graphitpulver ist.

3. Mineralische Zusammensetzung nach einem der vorstehenden Ansprüche, **dadurch gekennzeichnet, dass** der mittlere Durchmesser (D₅₀) des mineralischen Pulvers (c), bestimmt durch Lasergranulometrie, zwischen 5 und 250 µm, vorzugsweise zwischen 10 und 200 µm und insbesondere zwischen 20 und 150 µm liegt.

4. Mineralische Zusammensetzung nach einem der vorstehenden Ansprüche, **dadurch gekennzeichnet, dass** die spezifische BET-Oberfläche des mineralischen Pulvers (c) zwischen 15 und 40 m²/g, und insbesondere zwischen 20 und 30 m²/g liegt.

5. Mineralische Zusammensetzung nach einem der vorstehenden Ansprüche, **dadurch gekennzeichnet, dass** das mineralische Pulver (c) eine Schüttdichte zwischen 0,02 und 0,3 g/cm³, vorzugsweise zwischen 0,03 und 0,2 g/cm³ aufweist.

6. Mineralische Zusammensetzung nach einem der vorstehenden Ansprüche, **dadurch gekennzeichnet, dass** der mineralische Bestandteil (b) auf Basis von Siliciumdioxid und/oder Aluminiumoxid aus der Gruppe ausgewählt ist, die von Siliciumdioxid, Aluminiumoxid, Cordierit oder einer feuerfesten Mullitschamotte gebildet ist.

7. Mineralische Zusammensetzung nach einem der vorstehenden Ansprüche, **dadurch gekennzeichnet, dass** sie ferner bis zu 30 Gew.-% eines oder mehrerer anderer Additive enthält, vorzugsweise ausgewählt aus der Gruppe, gebildet von expandierten oder nicht expandierten Glasperlen, Glasflocken, Mineralfasern und Vermiculit, vorzugsweise aus der Gruppe, gebildet von expandierten Glasperlen und Glasfasern.

8. Verfahren zur Herstellung einer Gießform, umfassend
- das Anmachen der mineralischen Zusammensetzung nach einem der vorstehenden Ansprüche mit Wasser, um eine fluide Zusammensetzung zu erhalten,
- das Gießen der fluiden Zusammensetzung in eine Form, die ein Modell des zu formenden Teils enthält,
- das Abbinden der angemachten Zusammensetzung, und nach vollständigem Aushärten,
- das Entfernen des Modells oder das Trennen des Modells und der erhaltenen Form.

9. Gießform, die nach dem Verfahren nach Anspruch 8 herstellbar ist.

10. Gießform nach vorstehendem Anspruch, **dadurch gekennzeichnet, dass** sie eine Temperaturleitfähigkeit bei Raumtemperatur zwischen 0,2 und 2 mm²/s, vorzugsweise zwischen 0,3 und 1,5 mm²/s, insbesondere zwischen 0,7 und 1,2 mm²/s aufweist.

## Claims

1. Mineral composition for the preparation of foundry moulds, comprising:
(a) from 20% to 90% by weight of plaster,
(b) from 10% to 75% by weight of a mineral component based on silica and/or alumina, and
(c) from 0.5% to 4.8%, preferably from 1.5% to 4.5% and in particular between 2% and 4.5% by weight, of a mineral powder having a thermal conductivity (λ) at 20°C of between 20 and 500 W/(m.K) and a specific surface area BET of between 12 and 50 m²/g,
these percentages being relative to the total weight of the sum of the components (a), (b) and (c).

2. Mineral composition according to Claim 1, **characterized in that** the mineral powder (c) is a graphite powder, preferably an expanded graphite powder or a compacted expanded graphite powder.

3. Mineral composition according to any one of the preceding claims, **characterized in that** the median diameter (D₅₀) of the mineral powder (c), determined by laser particle size analysis, is between 5 and 250 µm, preferably between 10 and 200 µm and in particular between 20 and 150 µm.

4. Mineral composition according to any one of the preceding claims, **characterized in that** the BET specific surface area of the mineral powder (c) is between 15 and 40 m²/g and in particular between 20 and 30 m²/g.

5. Mineral composition according to any one of the preceding claims, **characterized in that** the mineral powder (c) has a bulk density of between 0.02 and 0.3 g/cm³, preferably between 0.03 and 0.2 g/cm³.

6. Mineral composition according to any one of the preceding claims, **characterized in that** the mineral component (b) based on silica and/or alumina is selected from the group formed by silica, alumina, cordierite or a refractory chamotte based on mullite.

7. Mineral composition according to any one of the preceding claims, **characterized in that** it also contains up to 30% by weight of one or more other additives, preferably selected from the group formed by expanded or unexpanded glass beads, glass flakes, mineral fibres and vermiculite, preferably from the group formed by expanded glass beads and glass fibres.

8. Process for manufacturing a foundry mould, comprising:
- the mixing of the mineral composition according to any one of the preceding claims with water so as to obtain a fluid composition,
- the casting of the fluid composition in a mould containing a model of the part to be moulded,
- the setting of the mixed composition and, after complete curing,
- the removal of the model or separation of the model and of the mould obtained.

9. Foundry mould obtainable by the process of Claim 8.

10. Foundry mould according to the preceding claim, **characterized in that** it has a thermal diffusivity at ambient temperature of between 0.2 and 2 mm²/s, preferably between 0.3 and 1.5 mm²/s, in particular between 0.7 and 1.2 mm²/s.
